# EUROPEAN PATENT APPLICATION

(11) **EP 1 882 417 A1**
(43) Date of publication of application: **30.01.2008**
(21) Application number: 06722396.6
(22) Date of filing: 21.04.2006
(51) Int. Cl.: A23C 9/123, B65D 85/80

(54) **A PROCESS FOR PREPARING YOGHOURT WITHOUT MICROBIAL CONTAMINATION**

(30) Priority: 22.04.2005 CN 200510020776
(71) Applicant: Chengdu Jule Corporation (Group), Ltd., Chengdu, Sichuan 610041 (CN)
(72) Inventor: TONG, Enwen, Chengdu, Sichuan 610041 (CN); XIA, Xuesong, Chengdu, Sichuan 610041 (CN); XIANG, Yang, Chengdu, Sichuan 610041 (CN); GAN, Lu, Chengdu, Sichuan 610041 (CN)
(74) Representative: Vidon, Patrice
(86) International application number: PCT/CN2006/000767
(87) International publication number: WO 2006/111102

(57) **Abstract**

A process for preparing yoghourt without microbial contamination, especially aseptic packing technique for yoghourt. The aseptic canning process is divided into two steps of sterilizing milk and aseptic canning, and one inoculated lactobacillus milk tank is connected between the said two steps. Inside aseptic room, the inoculated lactobacillus milk tank is opened to introduce lactic acid bacteria and is whipped equably, then the lactobacillus milk enters aseptic canning apparatus by aseptic route so as to obtain yoghourt with lactic acid bacteria only and capable of being maintained for 2-3 months.

## Description

### Field of Invention

The invention is related to the process technique of yoghourt, especially aseptic packing technique without microbial contamination of yoghourt.

### Description of Related Arts

This aseptic liquid canning process has the advantages of exterminating the bacteria at an exceeding high temperature instantaneously and maintaining the yoghourt without antiseptic for several months at normal temperature, so the process has been widely used in domestic dairy industry. The yoghourt is made of the fermented sterilizing milk with lactic acid bacteria, the sterilizing milk with lactic acid bacteria can not be treated with antiseptic process so it is can not be canned directly by the existing aseptic liquid canning technique. The lactobacillus in the sterilizing milk can restrain the bacteria in the container, so the yoghourt only can be maintained for 20 days at 2-6°C. The guarantee period of the yoghourt can meet the normal producing and consuming time, however, it limits the large-scaled dairy enterprises to produce the yoghourt and sell it nationally in long distance, long time transportation and storage.

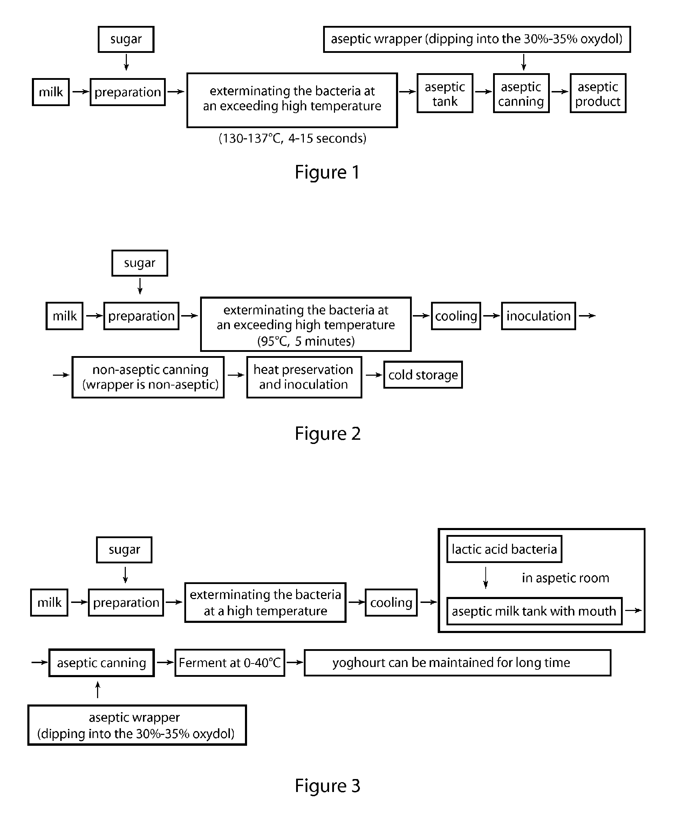

The existing aseptic milk process (drawing 1) and equipment can only produce aseptic milk; however, the yoghourt is a kind of milk with bacteria, so the original aseptic process and equipment are not applicable. The existing yoghourt process (drawing 2) produces milk in the environment with bacteria and does not use the aseptic canning process, so the guarantee period of the yoghourt is only 20 days at 2-6°C, the preservation period is limited so it can not meet the need of dairy enterprises to produce and sell their products.

### Summary of the Present Invention

The purpose of the invention is to provide a process for preparing yoghourt, which can be maintained for 2-3 months, without microbial contamination, and to solve the technical problem that the canning yoghourt has lactic acid bacteria without microbial contamination.

The aseptic canning process (drawing 3) is divided into two steps of sterilizing milk and aseptic canning, and one inoculated lactobacillus milk tank is connected between the said two steps. Inside aseptic room, the inoculated lactobacillus milk tank is opened to introduce lactic acid bacteria and whip equably, then the lactobacillus milk enters aseptic canning apparatus by aseptic route so as to obtain yoghourt with lactic acid bacteria only and capable of being maintained for 2-3 months.

The yoghourt without microbial contamination, i.e. the yoghourt with a long guarantee period is made up of soft packing, which is applicable by aseptic canning equipment, and the yoghourt which is packed in the soft container. The material of the soft container is the compound material of paper, plastic and aluminum foil or plastic bag without bacteria. The exterior structure of the aforesaid soft container is the any one of the structures of Tetra brick, Tetra pillow, kangmeibao or plastic bag. The aforesaid yoghourt is the sterilizing milk inoculated lactobacillus. This kind of milk is canned and sealed in the aseptic canning apparatus in aseptic environment, so the yoghourt in the soft container has lactic acid bacteria without microbial contamination. So this long guarantee period of yoghourt not even maintains for 2-3 months at 2-6°C but also can meet the GB2746-1999 Standard.

The lactobacillus that is inoculated in the yoghourt is Bulgaria lactobacillus and streptococcus thermophilus.

The above-mentioned yoghourt is made of the sterilizing milk without bacteria and it is inoculated the lactobacillus and fermented.

The above-mentioned wrapper has undergone the antiseptic treatment. The method of the antiseptic treatment is to use oxydol to exterminate the bacteria, that is to use 30%-50% edible oxydol to spread on the wrapper or dip it in the oxydol, then dry the wrapper using 100-140°C hot aseptic air to wipe off the oxydol in order to make the wrapper without bacteria; The abovementioned wrapper is made from the compounded material of paper, plastic and aluminum foil or aseptic plastic bag.

In this patent, the so called Tetra brick is the soft container made from the compounded material of paper, plastic and aluminum foil, which has the brick shape and is provided by the Sweden Tetra Pak; the so called Tetra pillow is the soft container made from the compounded material of paper, plastic and aluminum foil, which has the pillow shape and is provided by the Sweden Tetra Pak; the so called kangmeibao is the soft container made from the compounded material of paper, plastic and aluminum foil, which has the brick shape and is provided by the Switzerland SIG Group kangmeibao Limited. Co... The name of these soft containers: Tetra brick, Tetra pillow and kangmeibao are the general name called by the dairy and beverage industry. The Tetra brick, Tetra pillow and kangmeibao also can not be provided by Tetra Pak and kangmeibao Limited. Co.., but the material and shape of the container should be like the above-mentioned ones.

The process for preparing yoghourt without microbial contamination (drawing 3) is compounded by three parts, including the technique of using sterilizing milk inoculating the lactic acid bacteria in the normal sour milk preparation process, the technique of asepsis of container in the normal aseptic milk production and the technique of aseptic canning, i.e. to can the milk inoculated the lactobacillus without the microbial contamination in the aseptic container to obtain yoghourt with lactic acid bacteria only and capable of being maintained for 2-3 months at 2-6°C. The detailed steps are as following:
(1) Preparation: to mix the milk and sugar and heat it up to 80°C for 5-10 minutes to obtain the mixed milk.
(2) Extermination of bacteria: to exterminate the bacteria at an exceeding high temperature instantaneously or high temperature to obtain the sterilizing milk; the instantaneous high temperature of exterminating the bacteria is to put the milk at 130°C-137°C for 4-15 seconds and the high temperature of exterminating the bacteria is to put the milk at 94--96°C for 5-6 minutes; Then reduce the temperature to 42-44°C waiting for inoculating the lactobacillus;
(3) Inoculation of lactobacillus: in the aseptic room, to open the inoculated lactobacillus milk tank and introduce the lactic acid bacteria and whip it equably to obtain the lactobacillus milk;
(4) Asepsis of wrapper: to use the oxydol to exterminate the bacteria to obtain the aseptic wrapper;
   The asepsis of wrapper is to use the 30%-35% oxydol to spread on the wrapper or dip it into the oxydol, then to use the 100-140°C hot aseptic air to wipe off the oxydol to obtain the aseptic wrapper;
(5) Aseptic canning: to can and to seal the lactobacillus milk by using the aseptic container in the aseptic canning apparatus;
(6) Fermentation of yoghourt without microbial contamination: to put the said yoghourt in the environment of 0-40°C for 5-8 hours to obtain the yoghourt without microbial contamination, then to store the yoghourt at 2-6°C for sale.

The apparatus of preparing yoghourt without microbial contamination includes the apparatus of sterilizing milk and aseptic canning. The aseptic tank with inoculated mouth is connected between the said two apparatuses. The aseptic tank has an opening with a sealed cover and a whip device. First, introducing the lactic acid bacteria, second, closing the sealed cover, and last, turning on the whip device to whip the mixed aseptic milk equably to ferment.

The advantage of this invention is that the inoculated lactobacillus milk is canned in the aseptic container in aseptic environment, so the yoghourt only contains the useful bacteria and without the microbial contamination. This kind of yoghourt can be maintained for 2-3 months at 2-6°C; however, the existing process can only make the yoghourt be maintained for 20 days at 2-6°C.

### Brief Description of Drawings

Drawing 1 The existing process of producing aseptic milk;
Drawing 2 The existing process of producing yoghourt;
Drawing 3 The flowing chart of the process of preparing yoghourt without microbial contamination.

### The Detailed Description of the Preferred Example

### Example 1

The yoghourt without microbial contamination is composed by the soft container, which is applied to the aseptic canning apparatus, and the sour milk, which is sealed in the container. The sour milk is the yoghourt with lactic acid bacteria only and the material of the soft container is the Tetra brick.

### Example 2

The yoghourt without microbial contamination is composed by the soft container, which is applied to the aseptic canning apparatus, and the sour milk, which is sealed in the container. The sour milk is the yoghourt with lactic acid bacteria only and the material of the soft container is the Tetra pillow.

### Example 3

The yoghourt without microbial contamination is composed by the soft container, which is applied to the aseptic canning apparatus, and the sour milk, which is sealed in the container. The sour milk is the yoghourt with lactic acid bacteria only and the material of the soft container is the kangmeibao.

### Example 4

The yoghourt without microbial contamination is composed by the soft container, which is applied to the aseptic canning apparatus, and the sour milk, which is sealed in the container. The sour milk is the yoghourt with lactic acid bacteria only and the material of the soft container is the edible compounded plastic aseptic bag.

### Example 5

The aseptic canning technique are divided into two parts of sterilizing milk and aseptic canning, and one inoculated lactobacillus milk tank is connected between the said two steps. Inside aseptic room, the inoculated lactobacillus milk tank is opened to introduce lactic acid bacteria and whip equably, then the lactobacillus milk enters aseptic canning apparatus by aseptic route so as to obtain yoghourt with lactic acid bacteria only and capable of being maintained for 2-3 months. The steps are as following:
(1) Preparation: to mix the milk and sugar and heat it up to 80°C for 5-10 minutes to obtain the mixed milk; Then put it into the aseptic apparatus;
(2) Extermination of bacteria: to heat up the mixed milk to 94--96°C for 5-6 minutes and then to reduce the temperature to 42-44°C to obtain the aseptic milk;
(3) Inoculation of lactic acid bacteria: to output the aseptic milk from the aseptic apparatus into the inoculated lactobacillus milk tank of aseptic room, to open the tank and introduce the Bulgaria lactobacillus and streptococcus thermophilus and whip it equably to obtain the mixed milk. The lactic acid bacteria are provided by Dissiman Corporation of Holland, the type of the bacteria is CY-340, the proportion of the Bulgaria lactobacillus and streptococcus thermophilus is 2:98. 2U bacteria are inoculated in one ton aseptic milk. The 2U is the energy unit of bacterium, 1U contains 10¹² cfu active bacteria. One ton aseptic milk should inoculate about 50g CY-340 bacteria provided by Dissiman Corporation of Holland (50g≈2U).
(4) Asepsis of wrapper: to use oxydol to exterminate the bacteria to obtain the aseptic wrapper;
   To dip the wrapper into the 30%-35% oxydol for 0.5-3.0 seconds, then dry it by 100-140°C aseptic hot air to wipe off the oxydol on it. The wrapper can use any type of soft wrapper for aseptic canning apparatus, such as Tetra brick, Tetra pillow, kangmeibao or the edible compounded aseptic plastic bag.
(5) Aseptic canning: to can and to seal the lactobacillus milk by using the aseptic wrapper in the aseptic canning apparatus
(6) Fermentation of yoghourt without microbial contamination: to put the said yoghourt in the environment of 0-40°C for 5-8 hours to obtain the yoghourt without microbial contamination, then to store the yoghourt at 2-6°C for sale.

The above-mentioned yoghourt without microbial contamination in example 1, 2, 3, 4 is produced according to example 5.

### Example 6

Changing the step (2) of example 5 to exterminate the bacteria at a very high temperature, i.e. to put the milk at 130°C-137°C for 4-15 seconds and then reduce the temperature to 42-44°C to obtain the aseptic milk. The other steps, apparatus and materials are the same as example 5.

## Claims

1. The process for preparing yoghourt without microbial contamination has the following steps: including preparation, exterminating the bacteria, inoculation of lactobacillus, asepsis of wrapper, aseptic canning and fermentation of yoghourt:
(1) Preparation: to mix the milk and sugar and heat it up to 80°C for 5-10 minutes to obtain the mixed milk.
(2) Extermination of bacteria: to exterminate the bacteria at an exceeding high temperature instantaneously or high temperature to obtain the sterilizing milk; the instantaneous high temperature of exterminating the bacteria is to put the milk at 130°C-137°C for 4-15 seconds and the high temperature of exterminating the bacteria is to put the milk at 94--96°C for 5-6 minutes;
(3) Inoculating the lactobacillus: in the aseptic room, to open the inoculated lactobacillus milk tank and introduce the lactic acid bacteria and whip it equably to obtain the lactobacillus milk;
(4) Asepsis of wrapper: to use the oxydol to exterminate the bacteria to obtain the aseptic wrapper;
(5) Aseptic canning: to can and to seal the lactobacillus milk by using the aseptic container in the aseptic canning apparatus;
(6) Fermentation of yoghourt without microbial contamination: to put the said yoghourt without microbial contamination for fermentation in the environment of 0-40°C for 5-8 hours to obtain the yoghourt without microbial contamination.
